# EUROPÄISCHE PATENTSCHRIFT

(11) **EP 1 912 019 B1**
(45) Veröffentlichungstag und Bekanntmachung des Hinweises auf die Patenterteilung: **30.09.2015**
(21) Anmeldenummer: 07118046.7
(22) Anmeldetag: 08.10.2007
(51) Int. Cl.: F21S 8/10, B60Q 1/32

(54) **Außenliegendes Montagebauteil**
Exterior mounting component
Composant de montage extérieur

(30) Priorität: 09.10.2006 DE 102006048368
(43) Veröffentlichungstag der Anmeldung: 16.04.2008
(73) Patentinhaber: Huf Hülsbeck & Fürst GmbH & Co. KG, 42551 Velbert (DE)
(72) Erfinder: Mönig, Stefan, 48332 Schwelm (DE)
(74) Vertreter: Vogel, Andreas

(56) Entgegenhaltungen:
- EP-A- 1 479 857
- EP-A2- 1 424 739
- EP-A2- 1 864 890
- WO-A1-00/55009
- DE-A1- 10 039 685
- DE-A1- 19 929 422
- GB-A- 2 341 365
- US-A- 5 085 106
- US-A- 5 496 427
- US-A- 5 669 699
- US-A- 6 068 383
- US-A1- 2002 041 498
- US-A1- 2004 104 815
- US-A1- 2005 068 785
- US-B1- 6 176 602
- US-B1- 6 425 679

## Beschreibung

Die Erfindung betrifft ein außenliegendes Montagebauteil für ein Kraftfahrzeug, insbesondere für einen Außenspiegel, Türgriff etc., mit einem Beleuchtungsmodul, das mindestens ein sichtbares Licht emittierendes Leuchtmittel aufweist.

Derartige Beleuchtungsmodule sind im Bereich der Kraftfahrzeugtechnik überall dort bekannt, wo beispielsweise Licht erzeugt und abgestrahlt werden soll, beispielsweise für Scheinwerfer, Rücklichter, Bremslichter, Blinker und sowie für die Innenbeleuchtung der Fahrgastzelle sowie zur Beleuchtung von Armaturen und Geräten. Um insbesondere bei Dunkelheit den Komfort des Fahrzeugbenutzers beim Einsteigevorgang zu erhöhen, ist es bekannt, dass vor dem Einstieg die Innenbeleuchtung des Kraftfahrzeuges eingeschaltet wird. Dieses wird beispielsweise durch ein Sicherheitssystem des Kraftfahrzeuges bewirkt, der mit einem Identifikationsgeber (ID-Geber) in Signalverbindung steht.

Der Benutzer betätigt für den Einsteigevorgang in das Kraftfahrzeug den ID-Geber, wodurch ein Entriegelungsvorgang der Schließvorrichtung des Kraftfahrzeuges ausgelöst wird. Gleichzeitig wird die Innenbeleuchtung des Kraftfahrzeuges für eine gewisse Zeit eingeschaltet, wodurch bei dunkler Umgebung das subjektive Wohlbefinden des Benutzers durch diese Beleuchtung erhöht wird.

Während die Innenbeleuchtung des Kraftfahrzeuges aktiviert wird, ist es ebenfalls bekannt, dass das Beleuchtungsmodul an dem außenliegenden Montagebauteil aufblinkt, wodurch eine kurzzeitige Beleuchtung der Umgebung des Kraftfahrzeuges erzielt wird. Nachteilig jedoch ist, dass der Außenbereich des Kraftfahrzeuges nur unzureichend beleuchtet wird, welches eine Gefahrenquelle bei Dunkelheit während des Einsteigevorganges sein kann.

Die EP 1 864 890 A2 offenbart ein außenliegendes Montagebauteil für ein Kraftfahrzeug mit einem integrierten Beleuchtungsmodul. Durch einen Lichttransmissionsbereich wird ein farbiges Licht zur Beleuchtung der Umgebung des Kraftfahrzeuges emittiert. Dabei weist das Beleuchtungsmodul eine unzureichende Energieeffizienz und Leuchtintensität auf.

Es ist Aufgabe der vorliegenden Erfindung, ein außenliegendes Montagebauteil mit einem Beleuchtungsmodul zu schaffen, bei dem die oben genannten Nachteile vermieden werden, insbesondere ein höherer Komfort beim Einsteigevorgang bei Dunkelheit für den Benutzer erzielt wird.

Zur Lösung dieser Aufgabe wird ein außenliegendes Montagebauteil mit den Merkmalen des Anspruches 1 vorgeschlagen. In den abhängigen Ansprüchen sind bevorzugte Weiterbildungen der Erfindung ausgeführt.

Erfindungsgemäß ist vorgesehen, dass das Montagebauteil, in dem das Beleuchtungsmodul integriert ist, einen flächigen Lichttransmissionsbereich aufweist, und das Beleuchtungsmodul derart ausgeführt ist, dass weißes Licht den Lichttransmissionsbereich verlässt, wobei ein außenliegendes Beleuchtungsfeld im Einstiegsbereich des Kraftfahrzeuges entsteht.

Hierbei ist das Beleuchtungsmodul im Wesentlichen auf den Fahrzeugboden gerichtet, so dass eine ausreichende Beleuchtung im Einstiegsbereich erzielt wird. Die Gefahr, dass weitere Fahrzeugteilnehmer durch das Beleuchtungsfeld etwaig geblendet werden können, besteht nicht. Das Beleuchtungsmodul erzeugt bei Aktivierung ein sichtbares Licht, welches durch den Lichttransmissionsbereich strahlt und als weißes Licht nach außen das Montagebauteil verlässt. Das weiße Licht kann hierbei die unterschiedlichsten Farbabstufungen von weiß bis gelb aufweisen. Das außenliegende Montagebauteil kann beispielsweise ein Außenspiegel, ein Türgriff, ein Stoßfänger oder eine Zierleiste, ein Zierleistenelement oder ein Seitenschweller sein. Die Leuchtrichtung des weißen Lichtes erfolgt vorzugsweise in Bodenrichtung.

In einer möglichen Ausführungsform der Erfindung kann das Leuchtmittel als Leuchtdiode (LED) ausgeführt sein, wobei das Beleuchtungsmodul eine Vielzahl an Leuchtdioden aufweisen kann, die mit einem innerhalb des Montagebauteils sich befindenden Leiterelement verbunden sind. Das Leuchtmittel des Beleuchtungsmoduls kann beispielsweise als Leuchtdiode ausgebildet sein, die weißes Licht erzeugt. Beispielsweise kann das Leuchtmittel eine Konvertierungsschicht aufweisen, in der ein von dem Leuchtmittel emittiertes Primärlicht in ein Sekundärlicht konvertiert wird, das den Lichttransmissionsbereich bzw. das Leuchtmittel als weißes Licht verlässt. Das emittierte Primärlicht weist ein Emissionsmaximum (bzw. Intensitätsmaximum) im Wellenlängenbereich von 420nm bis 470nm (blaues Licht) oder ein Emissionsmaximum im Wellenlängenbereich von 300nm bis 420nm (UV-Licht) auf. Die Konvertierungsschicht weist vorzugsweise fluoreszierendes Material als Leuchtstoff auf, in dem insbesondere Phosphorpartikel enthalten sind. In einer möglichen Ausführungsform der Erfindung sind die Phosphorpartikel vorzugsweise in einem organischen Material eingebunden, welches Acryl oder Silikon sein kann. Ist das Primärlicht beispielsweise ein blaues Licht, dringt es in die Konvertierungsschicht ein und regt als kurzwilliges und damit energiereiches Licht das fluoreszierende Material an, wodurch ein langwilliges, energieärmeres gelbes Licht entsteht. Da nicht das gesamte blaue Licht (Primärlicht) in der Konvertierungsschicht umgewandelt wird, ergibt die resultierende additive Mischung der Farben blau und gelb das weiße Sekundärlicht, welches das Beleuchtungsmodul verlässt. Der Farbton dieser Weißlichtdiode ist über die Wahl und die Dosierung des fluoreszierenden Materials in der Konvertierungsschicht einstellbar, wobei der Farbton sich in der CIE-Norm-Farbtafel auf der Mischgeraden zwischen den Farben weiß und blau bewegt.

In einer weiteren Alternative der Erfindung kann die Konvertierungsschicht eine Keramikschicht sein, in der Phosphorpartikel eingebettet sind. Einer der Vorteile dieser Keramikschicht ist, dass diese eine hohe Stabilität hat und temperaturunempfindlich ist. Ferner kann die Keramikschicht, die zumindest teilweise transparent ausgeführt ist, aufgrund ihrer Materialeigenschaften in diverse Geometrien gebracht werden, so dass die Keramikschicht gleichzeitig als Optik genutzt werden kann, die das in der Keramikschicht konvertierte Licht in einem definierten Winkel zum Boden in den Außenbereich des Kraftfahrzeuges lenkt.

Weiterhin ist es denkbar, dass das Leuchtmittel als RGB-LED-Baugruppe ausgeführt ist, wobei eine erste Leuchtdiode (R) rotes Licht, eine zweite Leuchtdiode (G) grünes Licht und eine dritte Leuchtdiode (B) blaues Licht emittiert, wobei weißes Licht den Lichttransmissionsbereich verlässt. Die drei Leuchtdioden der Farben rot, grün und blau (RGB) sind zusammengeschaltet und erzeugen weißes Licht. Ferner ist es auch möglich, nur mit zwei Leuchtdioden weißes Licht entstehen zu lassen. Hierbei emittiert die erste Leuchtdiode das Licht mit der Farbe blau und die zweite Leuchtdiode Licht mit der Farbe gelb, wodurch weißes Licht entsteht und durch den Lichttransmissionsbereich das außenliegende Montagebauteil verlässt.

Das Beleuchtungsmodul ist mit einer Schaltung elektrisch verbunden, die das Leuchtmittel mit Energie, insbesondere mit Strom versorgt. Die Schaltung kann in einer möglichen Ausführungsform der Erfindung innerhalb des Montagebauteils integriert sein. In einer weiteren Alternative kann das Montagebauteil oder Beleuchtungsmodul über einen elektrischen Stecker verfügen, wodurch ein elektrischer Anschluss der Leuchtmittel mit einer Energiequelle, die innerhalb des Kraftfahrzeuges sich befindet, erzielbar ist. Vorteilhafterweise weist die Schaltung eine Pulsbreitenmodulationsschaltung auf, wodurch das Leuchtmittel über ein Pulsbreitenmodulationsignal (PWM-Signal) ansteuerbar ist, wodurch die Lebensdauer und die Effizienz der LED verbessert werden kann. Da die Effizienz des Leuchtmittels unter anderem mit steigender Temperatur sinkt, kann ab einer bestimmten Temperaturgrenze das Leuchtmittel zerstört werden. Der vor dem Leuchtmittel sich befindende Raumbegrenzungswiderstand verhindert, dass die oben genannte Temperaturgrenze erreicht wird. Die über den Widerstand entstehende Wärme wird vorteilhafterweise abgeleitet und kann für eine entsprechende, wenn auch kurzzeitige Erwärmung des Montagebauteils, beispielsweise des Außenspiegels oder des Türgriffes dienen. Eine mögliche Enteisung von Flächen am Montagebauteil kann erzielt werden.
Um das Beleuchtungsmodul vor zu hohen Temperaturen zu schützen, ist ein Temperatursensor innerhalb des Beleuchtungsmoduls vorgesehen, wodurch die Schaltung die Energieversorgung in Abhängigkeit von der gemessenen Temperatur steuert.

Es besteht die Möglichkeit, dass jedes einzelne Leuchtmittel durch jeweils eine eigene Schaltung angesteuert wird.

In einer weiteren die Erfindung verbessernden Maßnahme steht das Beleuchtungsmodul mit einem Lichtsensor in Signalverbindung, der die Helligkeit außerhalb des Fahrzeuges ermittelt, wobei ab einer definierten Helligkeit die Ansteuerung des Beleuchtungsmoduls zur Bildung eines Beleuchtungsfeldes deaktiviert wird. Hierbei entsteht das Beleuchtungsfeld lediglich ab einer definierten Außendunkelheit, wobei der Lichtsensor am Beleuchtungsmodul oder am Kraftfahrzeug angeordnet sein kann.

In einer möglichen Ausführungsform des Beleuchtungsmoduls kann das Leuchtmittel eine flächige OLED sein, wobei die OLED eine Kathodenschicht und eine Anodenschicht aufweist und zwischen beiden Schichten eine organische, Licht emittierende Schicht angeordnet ist, wobei die Kathodenschicht reflektierend ausgeführt ist und das erzeugte Licht die OLED im wesentlichen zur einer Seite verlässt. Durch Anlegen einer Spannung an der Kathodenschicht sowie an der Anodenschicht entsteht in der organischen Schicht Licht, welches an der Kathodenschicht reflektiert wird und durch die Anodenschicht in Richtung Lichttransmissionsbereich geleitet wird. Die Kathodenschicht kann zum Beispiel eine dünne Metallschicht aufweisen, die eine Reflektion des Lichtes bewirkt. Der Vorteil der OLED als Leuchtmittel ist, dass diese sehr dünn und großflächig, leicht und flexibel ist und eine hohe Helligkeit bei relativen niedrigem Energieverbrauch bietet, wobei die geringen Herstellkosten und die Langlebigkeit ebenfalls von Vorteil sind. Aufgrund der Flexibilität der OLED kann dieses Leuchtmittel gut der Geometrie des Montagebauteils angepasst werden.

Um das Beleuchtungsmodul vor Feuchtigkeit, Schmutz ect. zu schützen, ist das Beleuchtungsmodul vorteilhafterweise durch eine Ummantelung umfasst. Diese Ummantelung weist ein Kunststoffmaterial auf, welches zumindest im Bereich des Lichttransmissionsbereiches transparent für das vom Beleuchtungsmodul erzeugte Licht ist. In einer möglichen Alternative der Erfindung kann ein Teil der Ummantelung der Lichttransmissionsbereich des Montagebauteils selbst sein.

Vorteilhafterweise steht das Beleuchtungsmodul mit einem Sicherheitssystem in Signalverbindung, das einen mobilen ID-Geber zur schlüssellosen Aktivierung eines Ver- und Entriegelungsvorganges einer Schließvorrichtung aufweist, wobei über das Sicherheitssystem das Beleuchtungsmodul einschaltbar ist. Hierbei wird eine Datenkommunikation zwischen dem ID-Geber und der Schließvorrichtung zur Ver- und Entriegelung durchgeführt und ein Code ausgetauscht, wobei erst nach einer positiven Auswertung des Codes das Sicherheitssystem das Beleuchtungsmodul ansteuert, wodurch erst dann weißes Licht entsteht und ein Beleuchtungsfeld im Einstiegsbereich des Kraftfahrzeuges erzielt wird. Nach einer gewissen Zeit wird die Beleuchtung deaktiviert.

In einer bevorzugten Ausführungsform der Erfindung ist der Lichttransmissionsbereich bündig zum Montagebauteil angeordnet. Hierbei kann das Montagebauteil mehrschalig aufgebaut sein, wobei der Lichttransmissionsbereich und das Montagebauteil ein Bauteil bilden. Dieses Bauteil kann beispielsweise ein 2-Komponenten Spritzgussbauteil aus Kunststoff sein.

Ferner ist es denkbar, dass das Beleuchtungsmodul drehbar gelagert ist, im Rückwärtsgang aktivierbar ist und entsprechend des Lenkradeinschlages des Kraftfahrzeuges bewegt wird, wodurch das Beleuchtungsmodul als Einparkhilfe bei Dunkelheit dient. Um entsprechend der Lenkradposition das Beleuchtungsfeld zu steuern, ist es auch möglich, das außenliegende Montagebauteil zu verschwenken, wobei das Beleuchtungsmodul unverrückbar am Montagebauteil feststehend angeordnet ist. Im Falle des Türaußenspiegels kann das Beleuchtungsmodul über einen innerhalb des Außenspiegels angeordneten Antrieb, der für die elektrische Verstellung des Spiegels seine Verwendung findet, ebenfalls angesteuert und bewegt werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: ein Kraftfahrzeug mit zwei außenliegenden Montagebauteilen, von denen weißes Licht für ein Beleuchtungsfeld im Einstiegsbereich des Kraftfahrzeuges emittiert wird,
- Fig. 2: ein erfindungsgemäßes Beleuchtungsmodul für das außenliegende Montagebauteil gemäß Fig. 1,
- Fig.3: eine mögliche Alternative eines Leuchtmittels des Beleuchtungsmoduls gemäß Fig. 2,
- Fig.4: eine weitere Alternative des Leuchtmittels für das Beleuchtungsmodul gemäß Fig. 2,
- Fig. 5: eine zusätzliche Alternative des Leuchtmittels für das Beleuchtungsmodul gemäß Fig. 2 und
- Fig. 6: das erfindungsgemäße Montagebauteil in einem Kraftfahrzeugssicherheitssystem mit einem mobilen ID-Geber und einer Schließvorrichtung.

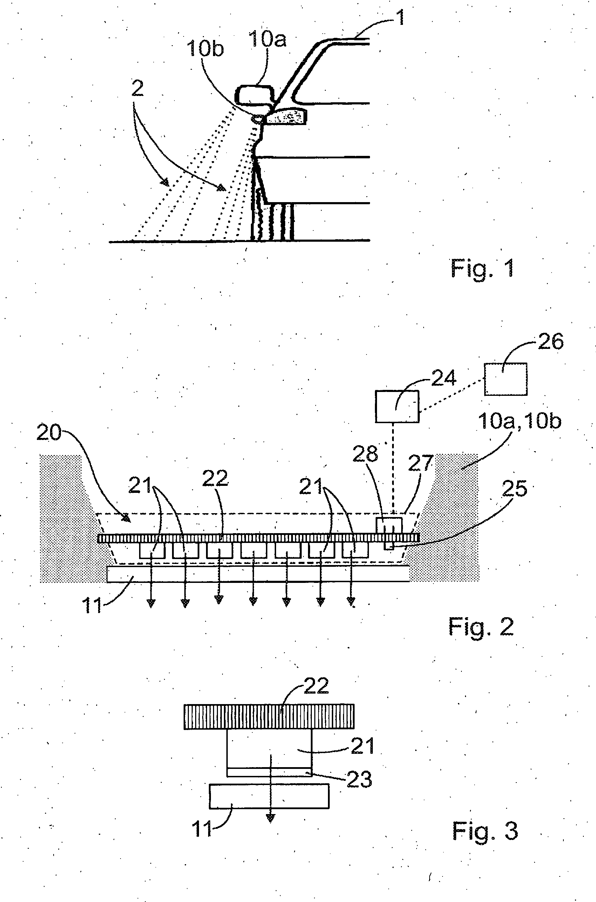

In Fig. 1 ist ein Kraftfahrzeug 1 dargestellt, welches einen Außenspiegel 10a und einen Türgriff 10b aufweist. Beide Montagebauteile 10a, 10b weisen ein Beleuchtungsmodul 20, gemäß Fig. 2 auf, das über Leuchtmittel 21 sichtbares Licht emittieren, wodurch ein außenliegendes Beleuchtungsfeld 2 im Einstiegsbereich des Kraftfahrzeuges 1 entsteht. Gemäß Fig. 2 ist das Beleuchtungsmodul 20 innerhalb des Montagebauteils 10a, 10b integriert. Das Beleuchtungsmodul 20 weist im vorliegenden Ausführungsbeispiel eine Vielzahl an Leuchtmittel 21 auf, die mit einem Leiterelement 22 elektrisch verbunden sind. Das Leiterelement 22 kann beispielsweise eine Leiterplatte sein. In einer weiteren nicht dargestellten Ausführungsform ist es denkbar, das Leiterelement 22 als flexible Folie auszuführen, die mit dem Leuchtmitteln 21 verbunden ist.

Das Montagebauteil 10a, 10b ist ferner mit einem Lichttransmissionsbereich 11 ausgeführt, der im vorliegenden Ausführungsbeispiel aus einem transparenten Kunststoff besteht. Der Lichttransmissionsbereich 11 kann eine Optik aufweisen, um ein entsprechendes Beleuchtungsfeld 2, welches ausschließlich in Richtung Bodenfläche gerichtet ist, zu erzeugen. Die Optik kann auch im Beleuchtungsmodul 22 integriert sein. An der den Leuchtmitteln 21 gegenüberliegenden Seite des Leiterelementes 22 ist ein Stecker 28 vorgesehen, durch den eine elektrische Verbindung zu einer Schaltung 24 besteht. Wird das Beleuchtungsmodul 20 durch die Schaltung 24 angesteuert, emittieren die Leuchtmittel 21 weißes Licht, das durch den Lichttransmissionsbereich 11 nach außen in Richtung Einstiegsbereich des Kraftfahrzeuges 1 gelangt. Die Leuchtmittel 21 können beispielsweise als Leuchtdiode (LED) ausgeführt sein, die weißes Licht emittieren, welches in Fig. 3 dargestellt ist. Hierbei erzeugt die LED 21 blaues Primärlicht, das in eine an der LED 21 angeordnete Konvertierungsschicht 23 strahlt. Das Primärlicht wird innerhalb der Konvertierungsschicht 23, das eine Schichtdicke von 10µm bis 1mm aufweisen kann, in ein Sekundärlicht umgewandelt, so dass weißes Licht den Lichttransmissionsbereich 11 verlässt.

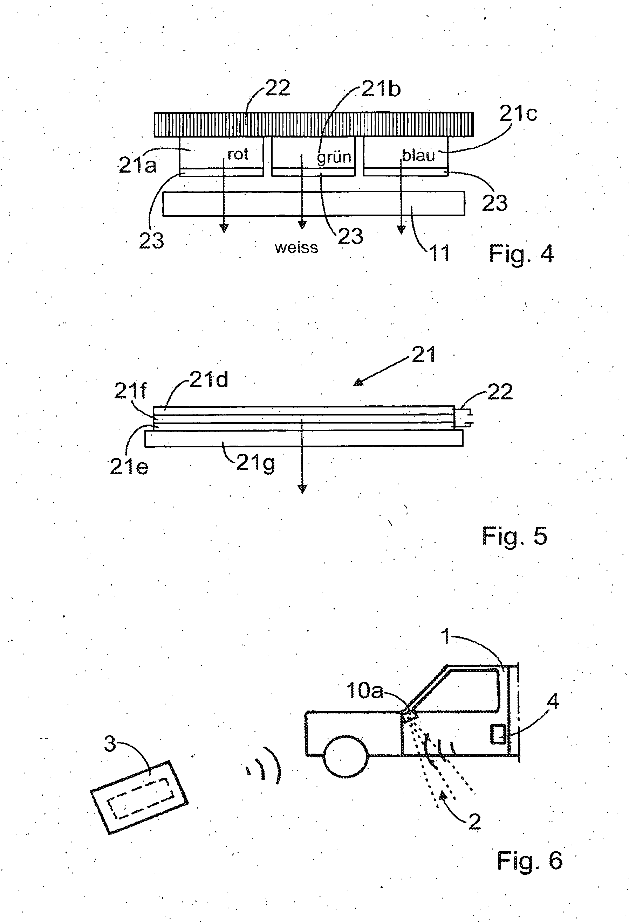

In Fig. 4 ist eine weitere Alternative für ein Leuchtmittel 21 dargestellt, das als RGB-LED-Baugruppe ausgeführt ist. Die RGB-LED-Baugruppe weist eine erste Leuchtdiode (R) 21a, die rotes Licht emittiert, eine zweite Leuchtdiode (G) 21b, die grünes Licht emittiert und eine dritte Leuchtdiode (B) 21c, die blaues Licht emittiert, auf. Gemäß Fig. 4 wird über die Leuchtdiode 21a, 21b, 21c UV-Licht als Primärlicht emittiert, das in der Konvertierungsschicht 23 in ein rotes, grünes und blaues Licht umgewandelt wird. Die Kombination dieser drei Lichtspektren ergibt ein weißes Licht, welches das Beleuchtungsfeld 2 im Außenbereich des Kraftfahrzeuges 1 bildet. Die Konvertierungsschichten 23 aus Fig. 4 weisen fluoreszierendes Material auf, wobei sich die drei Konvertierungsschichten 23 in der Wahl der fluoreszierenden Materialien unterscheiden. Im Gegensatz dazu benötigt das Beleuchtungsmodul 20 gemäß Fig. 3 eine Konvertierungsschicht 23 einen einzigen Leuchtstoff, zum Beispiel einen Cer dotierten bzw. aktivierten YAG (Yttrium-Aluminium-Granat).

Anstelle einer Vielzahl an LED's besteht die Möglichkeit als Leuchtmittel 21 für das Beleuchtungsmodul 20 gemäß Fig. 2 eine flächige OLED (organische Leuchtdiode) einzusetzen, die gemäß Fig. 5 aus einer Kathodenschicht 21d, einer Anodenschicht 21e und einer Emitterschicht 21f, die zwischen beiden Schichten 21d, 21e angeordnet ist, besteht. Unterhalb der Anodenschicht 21e befindet sich ein Substrat 21g aus Kunststoff. Durch das Leiterelement 22, das an der Kathodenschicht 21d und an der Anodenschicht 21e anliegt, wird die OLED 21 bestromt, wodurch die organische, Licht emittierende Schicht 21f Licht emittiert. Da die Kathodenschicht 21d reflektierend zur Emitterschicht 21f ausgebildet ist, verlässt das erzeugte weiße Licht die OLED 21 ausschließlich über das Substrat 21g. Im vorliegenden Ausführungsbeispiel ist die Schicht 21f mehrschichtig ausgebildet, welches nicht explizit dargestellt ist.

Die Beleuchtungsmodule 20, die in Fig. 3 bis Fig. 5 dargestellt sind, können durch eine Ummantelung 27 zusätzlich eingekapselt sein, wodurch die Elektronik des Beleuchtungsmoduls 20, insbesondere vor Feuchtigkeit, Schmutz ect. geschützt ist. Die Ummantelung 27 ist exemplarisch in Fig. 2 dargestellt und besteht vorzugsweise aus einem Kunststoff, der lichtransparent ist.

Vorteilhafterweise wird das Beleuchtungsmodul 20 in das Montagebauteil 10a, 10b eingeklipst. Der Lichttransmissionsbereich 11 ist hierbei bündig zum Montagebauteil 10a, 10b angeordnet. In einer möglichen, nicht dargestellten Ausführungsform des Montagebauteils kann der Lichttransmissionsbereich 11 als Konvertierungsschicht 23 ausgebildet sein. Vorteilhafterweise ist in diesem Fall der Lichttransmissionsbereich 11 ebenfalls durch die Ummantelung 27 eingekapselt, um das Beleuchtungsmodul 20 wirksam von außen zu schützen.

Gemäß Fig. 6 ist ein Sicherheitssystem des Kraftfahrzeuges 1 dargestellt, bei dem über einen mobilen ID-Geber 3 eine schlüssellose Aktivierung eines Ver- und Entriegelungsvorganges einer Schließvorrichtung 4, insbesondere einer Zentralverriegelung bewirkbar ist. Nachdem eine Entriegelung über den ID-Geber 3 erfolgt ist, aktiviert das Sicherheitssystem, beispielsweise über eine Steuereinheit, die nicht gezeigt ist, das Beleuchtungsmodul 20 innerhalb des Außenspiegels 10a, wodurch ein Beleuchtungsfeld 2 im Einstiegsbereich des Kraftfahrzeuges 1 entsteht.

In Fig. 2 ist ferner ein Temperatursensor 25 an der Leiterplatte 22 angeordnet, der die Temperatur innerhalb des Beleuchtungsmoduls 20 ermittelt. In Abhängigkeit von der gemessenen Temperatur steuert die Schaltung 24 die Energieversorgung der Leuchtmittel 21. Darüber hinaus ist die Schaltung 24 mit einem Lichtsensor 26 in Signalverbindung, wodurch bewirkt wird, dass das Beleuchtungsmodul 20 lediglich bei einer definierten Dunkelheit aktiviert wird.

### Bezugszeichenliste

- 1: Kraftfahrzeug
- 2: Beleuchtungsfeld
- 3: ID-Geber
- 4: Schließvorrichtung
- 10a: Montagebauteil, Außenspiegel
- 10b: Montagebauteil, Türgriff
- 11: Lichttransmissionsbereich
- 20: Beleuchtungsmodul
- 21: Leuchtmittel, Leuchtdiode, LED, OLED
- 21a: Leuchtdiode (R)
- 21b: Leuchtdiode (G)
- 21c: Leuchtdiode (B)
- 21d: Kathodenschicht
- 21e: Anodenschicht
- 21f: organische Schicht
- 21g: Substrat, Kunststoff
- 22: Leiterelement, Leiterplatte, Leitungsanschlüsse
- 23: Konvertierungsschicht
- 24: Schaltung
- 25: Temperatursensor
- 26: Lichtsensor
- 27: Ummantelung
- 28: Stecker

## Patentansprüche

1. Außenliegendes Montagebauteil (10a,10b) für ein Kraftfahrzeug (1), insbesondere für einen Außenspiegel (10a), Türgriff (10b) etc., mit
einem Beleuchtungsmodul (20), das mindestens ein sichtbares Licht emittierendes Leuchtmittel (21) aufweist,
wobei das Montagebauteil (10a,10b), in dem das Beleuchtungsmodul (20) integriert ist, einen flächigen Lichttransmissionsbereich (11) aufweist, und das Beleuchtungsmodul (20) sichtbares weißes Licht erzeugt, das den Lichttransmissionsbereich (11) verlässt, wobei ein außenliegendes Beleuchtungsfeld (2) im Einstiegsbereich des Kraftfahrzeuges (1) entsteht, wobei das Beleuchtungsmodul (20) mit einem Lichtsensor (26) in Signalverbindung steht, der die Helligkeit außerhalb des Fahrzeuges (1) ermittelt, wobei ab einer definierten Helligkeit die Ansteuerung des Beleuchtungsmoduls (20) zur Bildung eines Beleuchtungsfeldes (2) deaktiviert wird.
**dadurch gekennzeichnet,**
**dass** das Leuchtmittel (21) eine Konvertierungsschicht (23) aufweist, in der ein von dem Leuchtmittel (21) emittiertes Primärlicht in ein Sekundärlicht konvertiert wird, das den Lichttransmissionsbereich (11) als weißes Licht verlässt, wobei die Konvertierungsschicht (23) eine Keramikschicht ist,

2. Außenliegendes Montagebauteil (10a,10b) nach Anspruch 1,
**dadurch gekennzeichnet,**
**dass** das Leuchtmittel (21) als Leuchtdiode (LED) ausgeführt ist, wobei das Beleuchtungsmodul (20) eine Vielzahl an Leuchtdioden (21) aufweist, die mit einem innerhalb der Montageeinheit (10a,10b) sich befindenden Leiterelement (22) verbunden sind.

3. Außenliegendes Montagebauteil (10a,10b) nach Anspruch 2,
**dadurch gekennzeichnet,**
**dass** das Leiterelement (22) eine dünne, flexible Folie ist.

4. Außenliegendes Montagebauteil (10a, 10b) nach Anspruch 3,
**dadurch gekennzeichnet,**
**dass** das emittierte Primärlicht ein Emissionsmaximum im Wellenlängenbereich von 420nm bis 470nm oder ein Emissionsmaximum im Wellenlängenbereich von 300nm bis 420nm aufweist.

5. Außenliegendes Montagebauteil (10a,10b) nach Anspruch 3 oder 4,
**dadurch gekennzeichnet,**
**dass** die Konvertierungsschicht (23) eine Schichtdicke von 10µm bis 1 mm aufweist.

6. Außenliegendes Montagebauteil (10a,10b) nach einem der Ansprüche 3bis 5,
**dadurch gekennzeichnet,**
**dass** die Konvertierungsschicht (23) fluoreszierendes Material aufweist, in dem insbesondere Phosphorpartikel enthalten sind.

7. Außenliegendes Montagebauteil (10a,10b) nach einem der vorhergehenden Ansprüche,
**dadurch gekennzeichnet,**
**dass** das Leuchtmittel (21) als RGB-LED-Baugruppe ausgeführt ist, wobei eine erste Leuchtdiode (R) (21 a) rotes Licht, eine zweite Leuchtdiode (G) (21b) grünes Licht und eine dritte Leuchtdiode (B) (21 c) blaues Licht emittiert, wobei weißes Licht den Lichttransmissionsbereich (11) verlässt.

8. Außenliegendes Montagebauteil (10a,10b) nach einem der vorhergehenden Ansprüche,
**dadurch gekennzeichnet,**
**dass** das Beleuchtungsmodul (20) mit einer Schaltung (24) elektrisch verbunden ist, die das Leuchtmittel (21) mit Energie versorgt.

9. Außenliegendes Montagebauteil (10a,10b) nach einem der vorhergehenden Ansprüche,
**dadurch gekennzeichnet,**
**dass** das Leuchtmittel (21) über ein PWM-Signal der Schaltung (24) angesteuert wird.

10. Außenliegendes Montagebauteil (10a,10b) nach einem der vorhergehenden Ansprüche,
**dadurch gekennzeichnet,**
**dass** das Beleuchtungsmodul (20) einen Temperatursensor (25) aufweist, wobei die Schaltung (24) die Energieversorgung in Abhängigkeit von der gemessenen Temperatur steuert.

11. Außenliegendes Montagebauteil (10a,10b) nach einem der vorhergehenden Ansprüche,
**dadurch gekennzeichnet,**
**dass** das Leuchtmittel (21) eine flächige OLED ist, wobei die OLED (21) eine Kathodenschicht (21 d) und eine Anodenschicht (21 e) aufweist und zwischen beiden Schichten (21d,21e) eine organische, Licht emittierende Schicht (21f) angeordnet ist, wobei die Kathodenschicht (21 d) reflektierend ausgeführt ist und das erzeugte Licht die OLED (21) im wesentlichen zur einer Seite verlässt.

12. Außenliegendes Montagebauteil (10a,10b) nach einem der vorhergehenden Ansprüche,
**dadurch gekennzeichnet,**
**dass** das Beleuchtungsmodul (20) vollständig von einer Ummantelung (27) eingekapselt ist.

13. Außenliegendes Montagebauteil (10a,10b) nach einem der vorhergehenden Ansprüche,
**dadurch gekennzeichnet,**
**dass** das Beleuchtungsmodul (20) mit einem Sicherheitssystem in Signalverbindung steht, das einen mobilen ID-Geber (3) zur schlüssellosen Aktivierung eines Ver- und Entriegelungsvorganges einer Schließvorrichtung (4) aufweist, wobei über das Sicherheitssystem das Beleuchtungsmodul (20) einschaltbar ist.

14. Außenliegendes Montagebauteil (10a,10b) nach Anspruch 13,
**dadurch gekennzeichnet,**
**dass** zur Ver- und Entriegelung eine Datenkommunikation zwischen dem ID-Geber (3) und der Schließvorrichtung (4) erfolgt und ein Code ausgetauscht wird, wobei erst nach einer positiven Auswertung des Codes das Sicherheitssystem das Beleuchtungsmodul (20) ansteuert.

15. Außenliegendes Montagebauteil (10a,10b) nach einem der vorhergehenden Ansprüche,
**dadurch gekennzeichnet,**
**dass** der Lichttransmissionsbereich (11) bündig zum Montagebauteil (10a,10b) angeordnet ist.

16. Außenliegendes Montagebauteil (10a,10b) nach einem der vorhergehenden Ansprüche,
**dadurch gekennzeichnet,**
**dass** das Montagebauteil (10a,10b) mehrschalig aufgebaut ist, wobei der Lichttransmissionsbereich (11) und das Montagebauteil (10a,10b) ein Bauteil bilden.

17. Außenliegendes Montagebauteil (10a,10b) nach einem der vorhergehenden Ansprüche,
**dadurch gekennzeichnet,**
**dass** die Schaltung (24) innerhalb des Montagebauteils (10a,10b) angeordnet ist.

18. Außenliegendes Montagebauteil (10a,10b) nach einem der vorhergehenden Ansprüche,
**dadurch gekennzeichnet,**
**dass** der Lichttransmissionsbereich (11) eine Optik aufweist, welche das entsprechende Beleuchtungsfeld (2) erzeugt.

19. Außenliegendes Montagebauteil (10a, 10b) nach einem der vorhergehenden Ansprüche,
**dadurch gekennzeichnet,**
**dass** das Beleuchtungsmodul (20) drehbar gelagert ist, im Rückwärtsgang aktivierbar ist und entsprechend des Lenkradeinschlages des Kraftfahrzeuges (1) bewegt wird, wodurch das Beleuchtungsmodul (20) als Einparkhilfe bei Dunkelheit dient.

## Claims

1. An exterior mounting component (10a, 10b) for a motor vehicle (1), in particular for an external mirror (10a), door handle (10b) etc., having
an illumination module (20), which has at least one lamp (21) that emits visible light,
the mounting component (10a, 10b) in which the illumination module (20) is integrated having a flat light transmission region (11), and the illumination module (20) generating visible white light, which exits the light transmission region (11), an exterior illumination field (2) being produced in the entrance region of the motor vehicle (1),
the illumination module (20) being signal-connected to a light sensor (26), which determines the brightness outside the vehicle (1), the activation of the illumination module (20) to form an illumination field (2) being deactivated upwards of a defined brightness,
**characterised in that**
the lamp (21) has a conversion layer (23), in which a primary light emitted by the lamp (21) is converted into a secondary light, which exits the light transmission region (11) as white light, wherein the conversion layer (23) is a ceramic layer.

2. The exterior mounting component (10a, 10b) according to Claim 1,
**characterised in that**
the lamp (21) is configured as a light-emitting diode (LED), wherein the illumination module (20) has a multiplicity of light-emitting diodes (21), which are connected to a conductor element (22) situated inside the mounting unit (10a, 10b).

3. The exterior mounting component (10a, 10b) according to Claim 2,
**characterised in that**
the conductor element (22) is a thin, flexible foil.

4. The exterior mounting component (10a, 10b) according to Claim 3,
**characterised in that**
the emitted primary light has an emission maximum in the wavelength range from 420 nm to 470 nm or an emission maximum in the wavelength range from 300 nm to 420 nm.

5. The exterior mounting component (10a, 10b) according to Claim 3 or 4,
**characterised in that**
the conversion layer (23) has a layer thickness of 10 µm to 1 mm.

6. The exterior mounting component (10a, 10b) according to any one of Claims 3 to 5,
**characterised in that**
the conversion layer (23) has fluorescent material, which contains in particular phosphorus particles.

7. The exterior mounting component (10a, 10b) according to any one of the preceding claims,
**characterised in that**
the lamp (21) is configured as an RGB LED assembly, wherein a first light-emitting diode (R) (21a) emits red light, a second light-emitting diode (G) (21b) emits green light, and a third light-emitting diode (B) (21c) emits blue light, wherein white light exits the light transmission region (11).

8. The exterior mounting component (10a, 10b) according to any one of the preceding claims,
**characterised in that**
the illumination module (20) is electrically connected to a circuit (24) that supplies the lamp (21) with energy.

9. The exterior mounting component (10a, 10b) according to any one of the preceding claims,
**characterised in that** the lamp (21) is activated by means of a PWM signal of the circuit (24).

10. The exterior mounting component (10a, 10b) according to any one of the preceding claims,
**characterised in that**
the illumination module (20) has a temperature sensor (25), wherein the circuit (24) controls the energy supply depending on the measured temperature.

11. The exterior mounting component (10a, 10b) according to any one of the preceding claims,
**characterised in that**
the lamp (21) is a flat OLED, wherein the OLED (21) has a cathode layer (21d) and an anode layer (21e), and an organic light-emitting layer (21f) is arranged between the two layers (21d, 21e), wherein the cathode layer (21d) is reflective and the produced light exits the OLED (21) substantially to one side.

12. The exterior mounting component (10a, 10b) according to any one of the preceding claims,
**characterised in that**
the illumination module (20) is completely encapsulated by a jacket (27).

13. The exterior mounting component (10a, 10b) according to any one of the preceding claims,
**characterised in that**
the illumination module (20) is signal-connected to a security system, which has a mobile ID transmitter (3) for keyless activation of a locking and unlocking process of a lock device (4), wherein the illumination module (20) can be switched on by means of the security system.

14. The exterior mounting component (10a, 10b) according to Claim 13,
**characterised in that**
for locking and unlocking, data communication takes place between the ID transmitter (3) and the lock device (4) and a code is exchanged, wherein the security system only activates the illumination module (20) after a positive evaluation of the code.

15. The exterior mounting component (10a, 10b) according to any one of the preceding claims,
**characterised in that**
the light transmission region (11) is arranged flush with the mounting component (10a, 10b).

16. The exterior mounting component (10a, 10b) according to any one of the preceding claims,
**characterised in that**
the mounting component (10a, 10b) has a multi-shell construction, wherein the light transmission region (11) and the mounting component (10a, 10b) form one component.

17. The exterior mounting component (10a, 10b) according to any one of the preceding claims,
**characterised in that**
the circuit (24) is arranged inside the mounting component (10a, 10b).

18. The exterior mounting component (10a, 10b) according to any one of the preceding claims,
**characterised in that**
the light transmission region (11) has optics, which produce the corresponding illumination field (2).

19. The exterior mounting component (10a, 10b) according to any one of the preceding claims,
**characterised in that**
the illumination module (20) is rotatably mounted, can be activated in reverse gear and is moved according to the turning angle of the steering wheel of the motor vehicle (1), as a result of which the illumination module (20) acts as a parking aid in the dark.

## Revendications

1. Composant de montage extérieur (10a, 10b) pour un véhicule automobile (1), en particulier pour un rétroviseur extérieur (10a), une poignée de porte (10b), etc., comprenant
un module d'éclairage (20) qui présente au moins un moyen d'éclairage (21) émettant de la lumière visible,
le composant de montage (10a, 10b) dans lequel le module d'éclairage (20) est intégré présentant une zone de transmission de lumière (11) plane, et le module d'éclairage (20) produisant une lumière visible blanche qui quitte la zone de transmission de lumière (11), ce dont il résulte un champ d'éclairage extérieur (2) dans la zone d'entrée du véhicule automobile (1),
le module d'éclairage (20) étant en liaison de signalisation avec un capteur de lumière (26) qui détermine la luminosité à l'extérieur du véhicule (1), la commande du module d'éclairage (20) pour produire un champ d'éclairage (2) étant désactivée à partir d'une luminosité définie,
**caractérisé en ce**
**que** le moyen d'éclairage (21) présente une couche de conversion (23) dans laquelle une lumière primaire émise par le moyen d'éclairage (21) est convertie en une lumière secondaire qui quitte la zone de transmission de lumière (11) sous la forme d'une lumière blanche, la couche de conversion (23) étant une couche de céramique.

2. Composant de montage extérieur (10a, 10b) selon la revendication 1,
**caractérisé en ce**
**que** le moyen d'éclairage (21) est réalisé sous la forme d'une diode électroluminescente (LED), le module d'éclairage (20) présentant une pluralité de diodes électroluminescentes (21) qui sont reliées à un élément conducteur (22) se trouvant à l'intérieur de l'unité de montage (10a, 10b).

3. Composant de montage extérieur (10a, 10b) selon la revendication 2,
**caractérisé en ce**
**que** l'élément conducteur (22) est une feuille mince flexible.

4. Composant de montage extérieur (10a, 10b) selon la revendication 3,
**caractérisé en ce**
**que** la lumière primaire émise présente un maximum d'émission dans la gamme de longueurs d'onde de 420 nm à 470 nm ou un maximum d'émission dans la gamme de longueurs d'onde de 300 nm à 420 nm.

5. Composant de montage extérieur (10a, 10b) selon la revendication 3 ou 4,
**caractérisé en ce**
**que** la couche de conversion (23) présente une épaisseur de couche de 10 µm à 1 mm.

6. Composant de montage extérieur (10a, 10b) selon l'une des revendications 3 à 5,
**caractérisé en ce**
**que** la couche de conversion (23) présente un matériau fluorescent contenant en particulier des particules de phosphore.

7. Composant de montage extérieur (10a, 10b) selon l'une des revendications précédentes,
**caractérisé en ce**
**que** le moyen d'éclairage (21) est réalisé sous la forme d'un ensemble de LED RGB, une première diode électroluminescente (R) (21 a) émettant une lumière rouge, une deuxième diode électroluminescente (G) (21 b) une lumière verte et une troisième diode électroluminescente (B) (21c) une lumière bleue, une lumière blanche quittant la zone de transmission de lumière (11).

8. Composant de montage extérieur (10a, 10b) selon l'une des revendications précédentes,
**caractérisé en ce**
**que** le module d'éclairage (20) est relié électriquement à un circuit (24) qui alimente le moyen d'éclairage (21) en énergie.

9. Composant de montage extérieur (10a, 10b) selon l'une des revendications précédentes,
**caractérisé en ce**
**que** le moyen d'éclairage (21) est commandé par un signal PWM du circuit (24).

10. Composant de montage extérieur (10a, 10b) selon l'une des revendications précédentes,
**caractérisé en ce**
**que** le module d'éclairage (20) présente un capteur de température (25), le circuit (24) commandant l'alimentation en énergie en fonction de la température mesurée.

11. Composant de montage extérieur (10a, 10b) selon l'une des revendications précédentes,
**caractérisé en ce**
**que** le moyen d'éclairage (21) est une OLED plane, l'OLED (21) présentant une couche de cathode (21 d) et une couche d'anode (21e) et une couche organique luminescente (21f) étant disposée entre les deux couches (21d, 21e), la couche de cathode (21d) étant réfléchissante et la lumière produite quittant l'OLED (21) sensiblement d'un côté.

12. Composant de montage extérieur (10a, 10b) selon l'une des revendications précédentes,
**caractérisé en ce**
**que** le module d'éclairage (20) est complètement encapsulé par une enveloppe (27).

13. Composant de montage extérieur (10a, 10b) selon l'une des revendications précédentes,
**caractérisé en ce**
**que** le module d'éclairage (20) est en liaison de signalisation avec un système de sécurité qui présente un émetteur d'identification mobile (3) pour l'activation sans clé d'une opération de verrouillage et de déverrouillage d'un dispositif de fermeture (4), le module d'éclairage (20) pouvant être activé par l'intermédiaire du système de sécurité.

14. Composant de montage extérieur (10a, 10b) selon la revendication 13,
**caractérisé en ce**
**que** pour le verrouillage et le déverrouillage, une communication de données a lieu et un code est échangé entre l'émetteur d'identification (3) et le dispositif de fermeture (4), le système de sécurité n'activant le module d'éclairage (20) qu'après une évaluation positive du code.

15. Composant de montage extérieur (10a, 10b) selon l'une des revendications précédentes,
**caractérisé en ce**
**que** la zone de transmission de lumière (11) est disposée en affleurement avec le composant de montage (10a, 10b).

16. Composant de montage extérieur (10a, 10b) selon l'une des revendications précédentes,
**caractérisé en ce**
**que** le composant de montage (10a, 10b) est constitué de plusieurs coques, la zone de transmission de lumière (11) et le composant de montage (10a, 10b) formant un composant.

17. Composant de montage extérieur (10a, 10b) selon l'une des revendications précédentes,
**caractérisé en ce**
**que** le circuit (24) est disposé à l'intérieur du composant de montage (10a, 10b).

18. Composant de montage extérieur (10a, 10b) selon l'une des revendications précédentes,
**caractérisé en ce**
**que** la zone de transmission de lumière (11) présente une optique, laquelle produit le champ d'éclairage (2) correspondant.

19. Composant de montage extérieur (10a, 10b) selon l'une des revendications précédentes,
**caractérisé en ce**
**que** le module d'éclairage (20) est monté rotatif, peut être activé en marche arrière et est déplacé en fonction de l'angle de braquage du volant de direction du véhicule automobile (1), de sorte que le module d'éclairage (20) sert d'aide au stationnement dans l'obscurité.
